(19) Europäisches Patentamt
European Patent Office
Office européen des brevets

(11) EP 2 667 533 A1

(12) EUROPEAN PATENT APPLICATION
published in accordance with Art. 153(4) EPC

(43) Date of publication:
27.11.2013 Bulletin 2013/48

(51) Int Cl.:
H04L 1/06 (2006.01)     H04L 1/16 (2006.01)
H04W 28/18 (2009.01)

(21) Application number: 12729823.0

(22) Date of filing: 19.01.2012

(86) International application number:
PCT/CN2012/070562

(87) International publication number:
WO 2012/089172 (05.07.2012 Gazette 2012/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 31.12.2010 CN 201010619636

(71) Applicant: Huawei Technologies Co., Ltd.
Shenzhen, Guangdong 518129 (CN)

(72) Inventors:
• SUN, Jingyuan
Shenzhen
Guangdong 518129 (CN)

• REN, Xiaotao
Shenzhen
Guangdong 518129 (CN)
• ZHOU, Yongxing
Shenzhen
Guangdong 518129 (CN)

(74) Representative: Thun, Clemens
Mitscherlich & Partner
Sonnenstraße 33
80331 München (DE)

Remarks:
A request for restoration of the right of priority under
Rule 49ter.2 PCT is pending before the EPO as
designated Office.

(54) **SINR FEEDBACK METHOD AND DEVICE**

(57) A method and a device for feeding back a signal to interference plus noise ratio are provided, which can use a CQI to effectively feed back an SINR. An embodiment of the present invention provides a method for feeding back a signal to interference plus noise ratio, including: obtaining a data transmission mode, a resource utilization mode, or a user equipment type for performing data transmission; determining a CQI table or CQI section corresponding to the data transmission mode, the resource utilization mode, or the user equipment type; obtaining, by measurement, an SINR value of a downlink channel for performing the data transmission; determining, according to the determined CQI table or CQI table section corresponding to the data transmission mode, the resource utilization mode, or the user equipment type, and the obtained SINR value, a CQI corresponding to the SINR value; and feeding back the determined CQI to a network side entity.

FIG. 1

## Description

This application claims priority to Chinese Patent Application No. CN 201010619636.6, filed with the Chinese Patent Office on December 31, 2010 and entitled "METHOD AND DEVICE FOR FEEDING BACK SIGNAL TO INTERFERENCE PLUS NOISE RATIO", which is hereby incorporated by reference in its entirety.

## TECHNICAL FIELD

The present invention relates to the field of communication technologies, and in particular, to a method, a device, and a system for feeding back a signal to interference plus noise ratio.

## BACKGROUND

In a communications system, to perform scheduling processing, such as resource distribution and so on, on a downlink channel, a user terminal needs to perform measurement on a channel that the user terminal experiences. A UE (User Equipment, user equipment) performs measurement on a reference signal in the downlink channel, and feeds back channel information to a network side according to a measurement result. Channel information feedback needs to occupy certain uplink channel capacity. To improve feedback efficiency and save feedback overhead to the largest extent, before the channel information is fed back, quantizing processing needs to be performed, where the channel information is expressed by a channel feature parameter and then the channel feature parameter is fed back to the network side. The network side performs a scheduling operation according to the received channel feature parameter. The channel feature parameter includes: a CQI (Channel Quality Indicator, channel quality indicator), a PMI (Precoding Matrix Indicator, precoding matrix indication), or an RI (Rand Indication, rank indication), and so on.

In an LTE (Long Term Evolution, long term evolution) system, an SINR (Signal to Interference plus Noise Ratio, signal to interference plus noise ratio) of a channel is quantized, and 16 4bit CQIs are used to correspond to SINRs at 16 levels. For example, in some systems, CQIs cover SINRs ranging from -8.892 dB to 19.488 dB. After an SINR value is obtained by measurement, a corresponding CQI according to a CQI table is obtained, and the CQI is fed back to the network side. To further improve system performance, for example, to improve an average  spectral efficiency of a cell edge and a cell, LTEA (Long Term Evolution Advance, long term evolution-advanced) brings in some enhanced technologies, including: CoMP (Coordinated Multiple Point Transmission/Reception, coordinated multiple point transmission/reception), HetNet (Heterogeneous Network, heterogeneous network), eICIC (enhanced Inter-Cell Interference Coordination, enhanced inter-cell interference coordination), or Relay (relay), and so on. These technologies perform different processing on inter-cell interference, which can reduce interference to a user terminal to a large extent, thereby improving channel quality obtained by measurement to a large extent. Therefore, the range of SINRs required to be fed back becomes wider, which exceeds the range of SINRs corresponding to CQIs and defined in an existing system. When a channel SINR obtained by measurement exceeds a range fed back by existing CQIs, how to use a CQI to effectively feed back an SINR becomes a problem.

## SUMMARY

A technical problem to be solved by embodiments of the present invention is: providing a method and a device for feeding back a signal to interference plus noise ratio, which can use a CQI to effectively feed back an SINR.

A method for feeding back a signal to interference plus noise ratio provided by an embodiment of the present invention includes:

obtaining a data transmission mode, a resource utilization mode, or a user equipment type for performing data transmission; determining a CQI table or a CQI section corresponding to the data transmission mode, the resource utilization mode, or the user equipment type; obtaining, by measurement, an SINR value of a downlink channel for performing the data transmission; determining, according to the determined CQI table or CQI table section corresponding to the data transmission mode, the resource utilization mode, or the user equipment type, and the obtained SINR value, a CQI corresponding to the SINR value; and feeding back the determined CQI to a network side entity.

Another method for feeding back a signal to interference plus noise ratio provided by an embodiment of the present invention includes:

receiving a CQI reported by a user equipment, where the CQI is a CQI of a downlink channel for performing data transmission, which is obtained by measurement performed by the user equipment; determining a CQI table or a CQI section corresponding to a data transmission mode, a resource utilization mode, or a user equipment type for performing the data transmission; and determining, according to the determined CQI table or CQI section corresponding to the data transmission mode, the resource utilization mode, or the user equipment type, and the received CQI, an SINR (Signal to interference plus noise ratio, signal to interference plus noise ratio) value corresponding to the CQI.

A user equipment provided by an embodiment of the present invention includes:

a first obtaining unit, configured to obtain a data transmission mode, a resource utilization mode, or a user equipment type for performing data transmission; a first determining unit, configured to obtain a CQI table or a CQI section corresponding to the data transmission mode, the resource utilization mode, or the user equipment type obtained by the first obtaining unit; a second obtaining unit, configured to obtain, by measurement, an SINR value of a downlink channel for performing the data transmission; a second determining unit, configured to determine a CQI corresponding to the SINR value according to the CQI table or the CQI table section corresponding to the data transmission mode, the resource utilization mode, or the user equipment type determined by the first determining unit, and the SINR value obtained by the second obtaining unit; and a first sending unit, configured to feed back the determined CQI to a network side entity.

A base station provided by an embodiment of the present invention includes:

a receiving unit, configured to receive a CQI reported by a user equipment, where the CQI is a CQI of a downlink channel for performing data transmission, which is obtained by measurement performed by the user equipment; a third determining unit, configured to determine a CQI table or a CQI section corresponding to a data transmission mode, a resource utilization mode, or a user equipment type for performing the data transmission; and a fourth determining unit, configured to determine an SINR value corresponding to the CQI according to the CQI received by the receiving unit, and the CQI table or the CQI section corresponding to the data transmission mode, the resource utilization mode, or the user equipment type determined by the third determining unit.

The embodiments of the present invention modify a CQI expression mode of cell-specific (cell-specific) to a CQI expression mode of UE-specific (user-specific), and make an existing CQI feedback mode be capable of adapting to LTEA and application scenarios of a plurality of different transmission modes, resource utilization modes, or user equipment types in the future, to effectively improve channel quality feedback accuracy in LTEA and a future wireless communications system, thereby enhancing cell average throughput and throughput of a cell edge user.

## BRIEF DESCRIPTION OF DRAWINGS

FIG. 1 is a flowchart of an SINR feedback method according to an embodiment of the present invention;
FIG. 2 is a flowchart of an SINR feedback method according to another embodiment of the present invention;
FIG. 3 is a flowchart of an SINR feedback method according to a first embodiment of the present invention;
FIG. 4 is a flowchart of an SINR feedback method according to a second embodiment of the present invention;
FIG. 5 is a flowchart of an SINR feedback method according to a third embodiment of the present invention;
FIG. 6 is a flowchart of an SINR feedback method according to a fourth embodiment of the present invention;
FIG. 7 is a structural schematic diagram of a user equipment according to the present invention; and
FIG. 8 is a structural schematic diagram of a base station according to the present invention.

## DESCRIPTION OF EMBODIMENTS

A CQI table may be stored or created on a UE and an eNB. A CQI table includes a certain number of CQIs. Each CQI corresponds to an SINR value or an SINR value range. An SINR step of a CQI table is a difference between smallest SINR values corresponding to neighboring CQIs, and may also be a difference between largest SINR values corresponding to neighboring CQIs. The SINR step of a CQI table is consistent or basically consistent. In a CQI table, a smallest CQI may correspond to a smallest SINR value or SINR value range, and a largest CQI may correspond to a largest SINR value or SINR value range. An SINR corresponding to a CQI in a table may be distributed between a smallest SINR value or SINR value range and a largest SINR value or SINR value range. For example, Table 1 shows an exemplary CQI table.

**Table 1**

| CQI index | modulation | code rate x 1024 | efficiency | SINR |
|---|---|---|---|---|
| 0 | out of range | | | |
| 1 | QPSK | 78 | 0.1523 | xx |
| 2 | QPSK | 120 | 0.2344 | Xx |
| 3 | QPSK | 193 | 0.3770 | Xx |
| 4 | QPSK | 308 | 0.6016 | Xx |
| 5 | QPSK | 449 | 0.8770 | Xx |
| 6 | QPSK | 602 | 1.1758 | Xx |
| 7 | 16QAM | 378 | 1.4766 | Xx |
| 8 | 16QAM | 490 | 1.9141 | Xx |
| 9 | 16QAM | 616 | 2.4063 | Xx |
| 10 | 64QAM | 466 | 2.7305 | Xx |
| 11 | 64QAM | 567 | 3.3223 | Xx |
| 12 | 64QAM | 666 | 3.9023 | Xx |
| 13 | 64QAM | 772 | 4.5234 | Xx |
| 14 | 64QAM | 873 | 5.1152 | Xx |
| 15 | 64QAM | 948 | 5.5547 | Xx |

A CQI table may also include a corresponding relationship between a CQI and an MCS (modulation and coding scheme, Modulation and Coding Scheme) or a TBS (Transmission Block Size, transport block size), and so on. Usually, the number of CQIs in a CQI table is determined, to facilitate transmitting a CQI by using signaling having a determined number of bits.

For different types of UEs, different transmission modes, or different resource utilization modes, SINR value ranges of a channel are different. MCS ranges of a channel may also be different. In the embodiment of the present invention, a CQI table is stored or created on a UE and an eNB. A CQI table, optionally, may include a parameter, such as a UE ID, a transmission mode, or a resource utilization mode, and so on.

A CQI table may be a self-adaptive CQI table, which automatically adapts to a UE type, a transmission mode, or a resource utilization mode. A CQI section may be determined from a stored self-adaptive CQI table according to a UE type, a transmission mode, or a resource utilization mode, and so on. The CQI section may also be determined by comprehensively considering one or a plurality of factors, including a UE type, a transmission mode, or a resource utilization mode, and so on. According to the determined CQI section, and an SINR value obtained by measurement, a CQI value that needs to be reported is determined.

A UE type, for example, may be divided into a UE in a cell edge region and a UE in a cell center; a UE with a certain RSRQ (Reference Signal Received Quality, reference signal received quality) range; or a UE belonging to a specific type of cell, and so on. CQI sections corresponding to different types of UEs may be different. A corresponding CQI section is determined according to a UE type.

The downlink data transmission mode may include: a Single-cell (single cell) SU-MIMO (Single-User Multiple Input Multiple Output, single user multiple-input multiple-output) downlink data transmission mode and a Single-cell MU-MIMO (Multiple-User Multiple Input Multiple Output, multiple user multiple-input multiple-output) downlink data transmission mode; or a CoMP (Coordinated Multiple Point Transmission/Reception, coordinated multiple point transmission/reception) JP (Joint Precess, joint processing) SU-MIMO downlink data transmission mode and a CoMP JP MU-MIMO downlink data transmission mode. This may be implemented by using a transmitting technology, such as single-antenna transmitting, multiple-antenna diversity transmission, multiple-antenna beamforming transmitting, or multiple-cell joint beamforming transmitting, and so on. According to a transmission technology parameter, such as the number of used transmitting antennas, whether to use multiple-cell interference coordination, whether to use multiple-cell joint processing, the number of coordinated cells when multiple-cell coordination is used, and whether to use an MU-MIMO technology, and so on, a CQI section corresponding to the downlink data transmission mode may be determined.

In an LTEA system, a downlink resource utilization mode may include: ICIC (Inter-Cell Interference Coordination, inter-cell interference coordination); HetNet (Heterogeneous Network, heterogeneous network), in which different cells use different bandwidth; Relay (relay) or Femto (family base station), and so on, which is very close in distance to a UE; or, a higher-order modulation mode than 64QAM (Quadrature Amplitude Modulation, quadrature amplitude modulation), and so on. A CQI section corresponding to the resource utilization mode may be determined according to a resource utilization mode parameter, such as whether to be used for transmission, a difference between a total transmit power and a maximum available transmit power, and a resource utilization mode of a neighboring cell and the parameter for the resource utilization mode of the neighboring cell, and so on.

A plurality of CQI tables may also be stored on the UE and eNB sides, where the CQI tables are CQI tables corresponding to different UE types, different transmission modes, or different resource utilization modes. A CQI table may be determined according to a UE type, a transmission mode, or a resource utilization mode, and so on. A proper CQI table may also be determined by comprehensively considering one or a plurality of factors, including a UE type, a transmission mode, or a resource utilization mode, and so on. According to the determined CQI table, and an SINR value obtained by measurement, a CQI value that needs to be reported is determined.

If it is found that a stored CQI table and CQI section are inapplicable, an existing CQI table and CQI section need to be created or updated. CQI table and CQI section inapplicability refers to that an SINR coverage range corresponding to a CQI table and a CQI section has a deviation, for example, an SINR central point of a channel is n dB different from an SINR central point expressed by a CQI table and a CQI section, an SINR range expressed by a CQI table and a CQI section is lower than 95% of an SINR coverage range obtained by measurement, or the largest error between an SINR range corresponding to a CQI table and a CQI section and an SINR range obtained by measurement is out of an m dB range, and so on.

For different types of UEs, different transmission modes, or different resource utilization modes, a statistics feature of a channel SINR is obtained by measurement, for example, including but not limited to obtaining, by measurement, an average value, a start point, an end point, and probability distribution of a channel SINR. According to the statistics features obtained by measurement, the range or a major distribution region of the SINR may be determined. A major distribution region refers to a region in which all SINR values within a certain error range may be distributed. According to the determined SINR range or major distribution region, a CQI table and a CQI section are updated or a CQI table and a CQI section are created, to make the updated or created CQI table and CQI section cover the determined SINR range or major distribution region. By adjusting an SINR start point corresponding to a CQI table and a CQI section, an SINR end point corresponding to a CQI table and a CQI section, an SINR step, the number of included CQIs, or a value of an SINR corresponding to a CQI, and so on, a CQI table and a CQI section may be updated. During the updating of a CQI table and a CQI section, if a corresponding MCS changes, the corresponding MCS also needs to be updated.

For example, a CQI table and a CQI section may be adjusted by respectively increasing or decreasing an m dB value for an SINR corresponding to each CQI in the CQI table and the CQI section. This adjustment may also be performed according to an SINR central point covered by a CQI table and CQI section corresponding to an actual channel condition, that is, an SINR value corresponding to each CQI is evenly distributed on the two sides of the central point according to a certain step, or be performed on a step of an SINR corresponding to a CQI.

After updating or creation of a CQI table and a CQI section, a CQI section or a CQI table and a CQI section that may be used may be determined from the updated or created CQI table and CQI section based on a UE type, a transmission mode, or a resource utilization mode, and so on. A CQI section or a CQI table and a CQI section that may be used may also be determined from the updated CQI table and CQI section by comprehensively considering one or a plurality of factors, including a UE type, a transmission mode, or a resource utilization mode, and so on. According to the determined CQI section or CQI table and CQI section, and an SINR value obtained by measurement, a CQI value that needs to be reported is determined.

A CQI table and a CQI section need to be synchronized on the eNodeB and the UE end. After a network end device, such as an eNodeB, or a UE, updates or creates a CQI table and a CQI section, it is required to inform a peer end of the updated or created CQI table and CQI section. The peer end may be informed after the CQI table and the CQI section are updated or created, and the peer end may also be informed during handshake updating. The peer end is informed of a parameter for the created or updated CQI table and CQI section. The peer end updates or creates, according to a parameter of the CQI table and CQI section obtained after being informed of, a CQI table and a CQI section. The parameter of the CQI table and CQI section that is informed of includes: an SINR start point corresponding to a CQI table and a CQI section, an SINR end point corresponding to a CQI table and a CQI section, an SINR step, the number of contained CQIs, a central point of an SINR corresponding to a CQI, or an SINR value corresponding to each CQI in a CQI table and a CQI section, and so on. The parameter of the CQI table and CQI section may also include: a UE ID, a transmission mode, a resource utilization mode, or an MCS value.

A parameter that needs to be modified and sent by a UE to an eNB may include but is not limited to one or a plurality of the following parameters: a smallest value or a largest value of an SINR range that may be covered by a CQI table and a CQI section; a step and a central point of an SINR range that may be covered by a CQI table and a CQI section; or, an SINR value and an MCS value corresponding to each CQI in a CQI table and a CQI section, and so on.

A downlink MCS table in downlink signaling may also perform self-adaptive mapping or generate a plurality of MCS tables in a CQI-like mode. For an uplink MCS in downlink control signaling, according to this mode, independent (that is, not being adjusted to be consistent with a downlink MCS table) self-adaptive mapping may also be performed or a plurality of MCS tables may also be generated.

A CQI table and a CQI section or an MCS table in all embodiments of the present invention may be one-to-one corresponding to a transmission mode, a resource utilization mode, and a UE, or may be corresponding to a plurality of transmission modes, resource utilization modes, and UEs, and so on. The following, with reference to accompanying drawings and embodiments, further describes technical solutions of the present invention in detail.

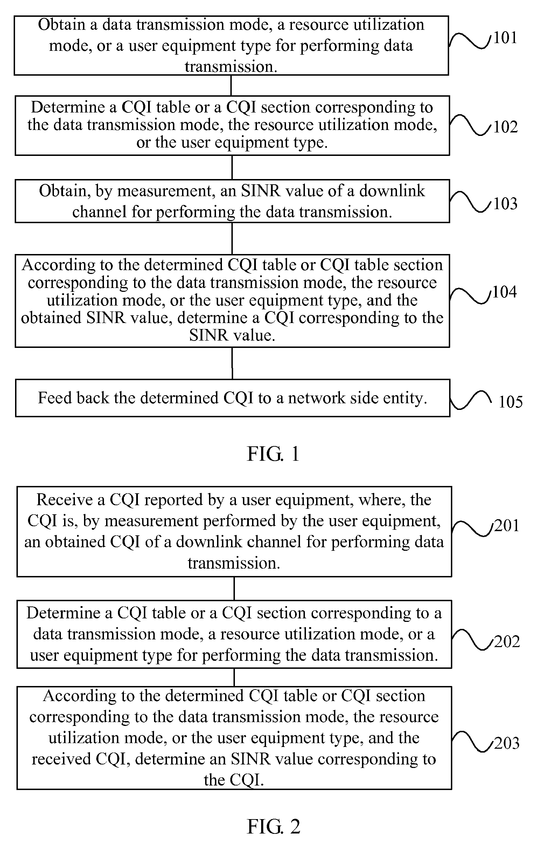

FIG. 1 is a flowchart of an SINR feedback method according to an embodiment of the present invention. As shown in FIG. 1, the method includes the following steps.

101: Obtain a data transmission mode, a resource utilization mode, or a user equipment type for performing data transmission.

102: Determine a CQI table or a CQI section corresponding to the data transmission mode, the resource utilization mode, or the user equipment type.

For details about the CQI table or the CQI section, reference may be made to the foregoing description, which is not introduced in detail herein.

103: Obtain, by measurement, an SINR value of a downlink channel for performing the data transmission.

104: Determine a CQI corresponding to the SINR value according to the determined CQI table or CQI table section corresponding to the data transmission mode, the resource utilization mode, or the user equipment type, and the obtained SINR value.

105: Feed back the determined CQI to a network side entity.

FIG. 2 is a flowchart of an SINR feedback method according to another embodiment of the present invention. As shown in FIG. 2, the method includes the following steps.

201: Receive a CQI reported by a user equipment, where the CQI is a CQI of a downlink channel for performing data transmission, which is obtained by measurement performed by the user equipment.

202: Determine a CQI table or a CQI section corresponding to a data transmission mode, a resource utilization mode, or a user equipment type for performing the data transmission.

203: Determine an SINR value corresponding to the CQI according to the determined CQI table or CQI section corresponding to the data transmission mode, the resource utilization mode, or the user equipment type, and the received CQI.

The embodiment of the present invention modifies a CQI expression mode of cell-specific (cell-specific) to a CQI expression mode of UE-specific (user-specific), and makes an existing CQI feedback mode be capable of adapting to LTEA and application scenarios of a plurality of different transmission modes, resource utilization modes, or user equipment types in the future, to effectively improve channel quality feedback accuracy in LTEA and a future wireless communications system, thereby enhancing cell average throughput and throughput of a cell edge user.

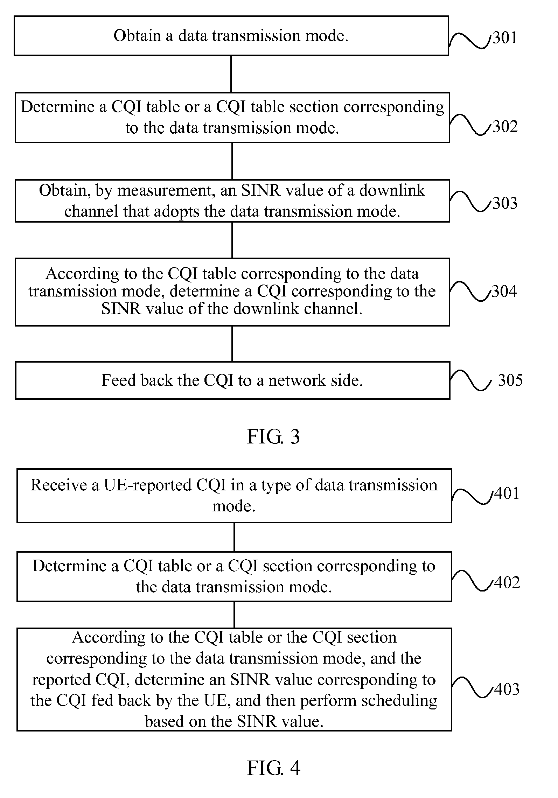

FIG. 3 is a flowchart of an SINR feedback method according to a first embodiment of the present invention. As shown in FIG. 3, the method includes the following steps.

301: Obtain a data transmission mode.

302: Determine a CQI table or a CQI table section corresponding to the data transmission mode.

In actual transmission, an SINR range corresponding to the same channel varies in different data transmission modes. In an LTEA (Long Term Evolution Advance, long term evolution-advanced) system, a downlink data transmission mode may include: a Single-cell (single cell) SU-MIMO (Single-User Multiple Input Multiple Output, single user multiple-input multiple-output) downlink data transmission mode and a Single-cell MU-MIMO (Multiple-User Multiple Input Multiple Output, multiple user multiple-input multiple-output) downlink data transmission mode; or a CoMP (Coordinated Multiple Point Transmission/Reception, coordinated multiple point transmission/reception) JP (Joint Precess, joint processing) SU-MIMO downlink data transmission mode and a CoMP JP MU-MIMO downlink data transmission mode, and so on.

In different data transmission modes, a CQI table and a CQI section expressing an SINR may be different. A CQI table or a CQI section corresponding to a data transmission mode may be preset in a UE and/or an eNB. According to the preset CQI table or CQI section corresponding to the data transmission mode, a CQI table or a CQI section corresponding to the data transmission mode is obtained. Or, a CQI table or a CQI section corresponding to the data transmission mode, a resource utilization mode, or a user equipment type is obtained from a network side entity.

However, an SINR range obtained by measurement may be different from a preset SINR range corresponding to a CQI table or a CQI section corresponding to a data transmission mode, where, when an obtained SINR is out of the range, a CQI may not effectively express an SINR of a channel. Then, the preset CQI table or CQI section needs to be updated.

When an SINR value corresponding to each CQI is updated and therefore changes, an MCS corresponding to the CQI may keep unchanged and may also change, in which case, the corresponding MCS needs to be updated. When the corresponding MCS also needs to be updated, during adjustment of a CQI table parameter, a corresponding MCS needs to be adjusted. When an SINR value corresponding to each CQI is updated and therefore changes, an MCS corresponding to the CQI may also not change.

A CQI table or a CQI section corresponding to a data transmission mode may be a type of empirical value. In a type of data transmission mode, obtaining, by measurement, statistics features of a channel SINR, including but not limited to obtaining, by measurement, an average value, a start point, an end point, and probability distribution of the channel SINR. The statistics features of the channel SINR may be a type of empirical value obtained by actual measurement. The actual measurement refers to measurement of SINRs generated in as many cases as possible that may occur in a data transmission mode where the longer measurement time is, the more covered possible cases are, and the more accurate an empirical value is. The range and a major distribution region of an SINR may be obtained. A major distribution region refers to a region in which all SINR values within a certain error range may be distributed, for example, a distribution region in which over 90% SINRs are distributed. Then, according to the SINR statistics features, adjustment is performed on a parameter in the CQI table. For example, adjustment is performed on the start point, the end point, or the average value of the CQI table, and still for example, SINR values corresponding to all CQIs are increased by 1.892 dB, and the CQI table is adjusted to cover the range or major distribution region of an SINR of a channel in the data transmission mode.

In a certain data transmission mode, a UE may perform measurement on SINRs of all available subbands, and moreover, after the SINRs of all available subbands are obtained by measurement a plurality of times, according to statistics, distribution probability of each sampling point may be calculated to obtain SINR statistics features, including an average value, a start point, an end point, probability distribution of an SINR, the range and a major distribution region of an SINR. A major distribution region refers to a region in which all SINR values within a certain error range may be distributed, for example, a distribution region in which over 90% SINRs are distributed. A difference between the SINR range or the SINR major distribution region obtained by measurement and a preset SINR range corresponding to a CQI table or a CQI section corresponding to the data transmission mode may be used as an adjusted amount, for example, x dB. The difference between the SINR range or the SINR major distribution region obtained by measurement and a preset SINR range corresponding to a CQI table or a CQI section corresponding to the data transmission mode may be the difference of start points, end points, or average values. The CQI table or the CQI section is adjusted to the SINR range or the SINR major distribution region obtained by measurement. For example, the start points, the end points, or the average values are consistent. If an SINR range corresponding to a CQI table or a CQI section is adjusted, an adjusted amount of an SINR needs to be reported to an eNB. A reporting mode may be dynamic or half-static. The adjusted amount of the SINR corresponding to the CQI table or the CQI section may also be reported together when a CQI is fed back to the eNB.

When these statistics features are inconsistent with statistics features of a corresponding CQI table that is being used, a UE may report all or part of SINR statistics features in the data transmission mode to an eNB. The eNB performs, according to the reported SINR statistics features in the data transmission mode, adjustment on a start point, an end point, or an average value, and so on of a CQI, to adjust the CQI table to cover the range or a major distribution region of an SINR of a channel in the data transmission mode. The eNB, by using downlink signaling, informs a UE of updating of a parameter for a CQI table or a CQI section corresponding to a UE data transmission mode, for example, informing that all SINR values expressed by CQIs in a CQI table or a CQI section corresponding to a UE data transmission mode increase by N dB. The eNB may also perform, according to a UE channel environment change and a data transmission mode change, half-static adjustment on an SINR range corresponding to a CQI table or a CQI section.

Moreover, a UE may perform, according to SINR statistics features in the data transmission mode, adjustment on a start point, an end point, or an average value, and so on of a CQI, to adjust a CQI table or a CQI section to cover the range or a major distribution region of an SINR of a channel in the data transmission mode. A CQI table parameter that needs to be adjusted in the data transmission mode is reported to an eNB. For example, an SINR start point corresponding to a CQI window is reported to an eNB, to illustrate a change of an SINR value corresponding to the CQI in the CQI table. The eNB performs, according to a UE-reported CQI table parameter that needs to be adjusted in the data transmission mode, updating on the CQI table or the CQI section corresponding to the data transmission mode. The eNodeB may acknowledge, by acknowledgement information, that the updated CQI table or CQI section can be used.

303: Obtain, by measurement, an SINR value of a downlink channel that adopts the data transmission mode.

304: Determine a CQI corresponding to the SINR value of the downlink channel according to the CQI table corresponding to the data transmission mode.

305: Feed back the CQI to a network side.

The CQI is used for the network side to determine, according to the CQI and the CQI table and the CQI section corresponding to the data transmission mode, an SINR value corresponding to a CQI fed back by a UE, and then to perform scheduling according to the SINR value.

When a UE performs adjustment on a preset CQI table and CQI section corresponding to a data transmission mode, the UE needs to report an adjusted amount of the CQI table and the CQI section corresponding to the data transmission mode to an eNB. A change of an MCS corresponding to each CQI may also be reported to the eNB, to make the eNB perform adjustment on the CQI table and the CQI section corresponding to the data transmission mode, and determine, according to the adjusted CQI table and CQI section corresponding to the data transmission mode, an SINR value corresponding to a CQI fed back by the UE.

Herein, adjustment may be updating of a CQI table or creation of a CQI table and establishment of a corresponding association relationship.

The embodiment of the present invention modifies a CQI expression mode of cell-specific (cell-specific) to a CQI expression mode of UE-specific (user-specific), and makes an existing CQI feedback mode be capable of adapting to LTEA and a plurality of different transmission modes and application scenarios in the future, to effectively improve channel quality feedback accuracy in LTEA and a future wireless communications system, thereby enhancing cell average throughput and throughput of a cell edge user.

FIG. 4 is a flowchart of an SINR feedback method according to a second embodiment of the present invention. As shown in FIG. 4, the method includes the following steps.

401: Receive a UE-reported CQI in a type of data transmission mode.

A UE measures in the data transmission mode to obtain an SINR value in the data transmission mode. According to a CQI table or a CQI section corresponding to the transmission mode, a CQI corresponding to the SINR value is determined. For the procedure for determining a CQI table or a CQI section corresponding to a transmission mode, reference may be made to the first embodiment for details, which is not described in detail herein.

LTE performs scheduling based on a subband in a frequency domain, a UE needs to measure in the data transmission mode to obtain the CQI of each subband, and the UE may report the obtained CQI of each subband to an eNB.

402: Determine a CQI table or a CQI section corresponding to the data transmission mode.

For details about a CQI table or a CQI section corresponding to a data transmission mode, reference may be made to relevant description in an embodiment, which is not introduced in detail herein. A CQI table or a CQI section corresponding to a data transmission mode may be preset in an eNB, and according to the preset CQI table or CQI section corresponding to the data transmission mode, an SINR value is determined. If a UE performs adjustment on the CQI table or the CQI section corresponding to the data transmission mode, an adjusted amount of the CQI table or the CQI section corresponding to the data transmission mode needs to be obtained, and according to an adjusted amount, adjustment on the CQI table or the CQI section corresponding to the data transmission mode is performed. According to the adjusted CQI table corresponding to the data transmission mode, an SINR value is determined. If the eNB performs adjustment on the CQI table or the CQI section corresponding to the data transmission mode, the UE needs to be informed of the adjusted amount.

403: Determine, according to the CQI table or the CQI section corresponding to the data transmission mode and the reported CQI, an SINR value corresponding to the CQI fed back by the UE, and then perform scheduling according to the SINR value.

After a UE reports a CQI of each subband, an eNB may obtain an SINR and a data rate corresponding to each subband. The data rate obtained herein is used for scheduling. For example, in proportional fairness scheduling, according to a data rate of a user or an average data rate of a user, a priority of the UE in a subband is obtained, and a user with a highest priority is selected to occupy the subband. After the distribution of obtained SINR user resources is completed, according to SINRs of all subbands distributed to the user, equivalent SINR $\gamma_{\text{eff}}$ of these subbands is obtained. For example, according to an EESM algorithm and so on, $\gamma_{\text{eff}} = -\beta \cdot \ln\left(\dfrac{1}{N_u} \sum_{k=1}^{N_u} e^{-\frac{\gamma_k}{\beta}}\right)$ is obtained, where $\gamma_{\text{eff}}$ is an equivalent SINR, $\gamma_k$ is an SINR of a kth subband, and $N_u$ is the total number of subbands. According to the equivalent SINR, and a mapping relationship between an SINR and an MCS, an MCS that a UE required to use is selected and distributed to the UE.

The embodiment of the present invention modifies a CQI expression mode of cell-specific (cell-specific) to a CQI expression mode of UE-specific (user-specific), and makes an existing CQI feedback mode be capable of adapting to LTEA and a plurality of different transmission modes and application scenarios in the future, to effectively improve channel quality feedback accuracy in LTEA and a future wireless communications system, thereby enhancing cell average throughput and throughput of a cell edge user.

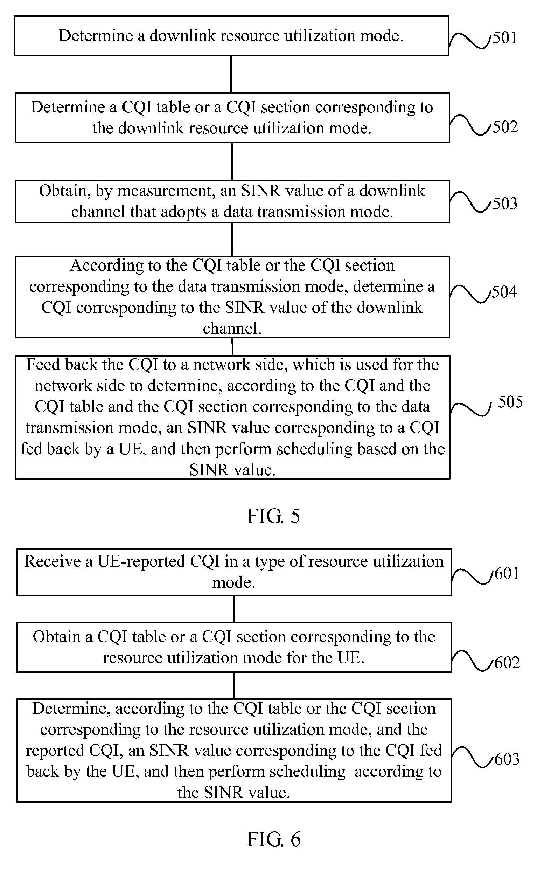

FIG. 5 is a flowchart of an SINR feedback method according to a third embodiment of the present invention. As shown in FIG. 5, the method includes the following steps.

501: Determine a downlink resource utilization mode.

502: Determine a CQI table or a CQI section corresponding to the downlink resource utilization mode.

As downlink resource utilization modes are different, corresponding SINR ranges are different. In an LTEA system, a downlink resource utilization mode may include: ICIC (Inter-Cell Interference Coordination, inter-cell interference coordination); HetNet (Heterogeneous Network, heterogeneous network), in which different cells use different bandwidth; Relay (relay) or Femto (family base station), and so on, which is very close in distance to a UE; or, a higher-order modulation mode than 64QAM (Quadrature Amplitude Modulation, quadrature amplitude modulation), and so on.

As different downlink resource utilization modes are used, CQI tables or CQI sections expressing SINRs may also be different. A CQI table or a CQI section corresponding to a downlink resource utilization mode may be preset in a UE and an eNB. According to a preset CQI table or CQI section corresponding to the downlink resource utilization mode, a CQI table or a CQI section corresponding to the downlink resource utilization mode is obtained.

However, an SINR range obtained by measurement may be different from a preset SINR range corresponding to a CQI table or a CQI section corresponding to a downlink resource utilization mode, where, when an SINR is out of the range, a CQI may not effectively express an SINR of a channel. Then, the preset CQI table or CQI section needs to be updated.

When an SINR value corresponding to each CQI is updated and therefore changes, an MCS corresponding to the CQI may keep unchanged and may also change, in which case, the corresponding MCS needs to be updated. When the corresponding MCS also needs to be updated, during adjustment of a CQI table parameter, a corresponding MCS needs to be adjusted. When an SINR value corresponding to each CQI is updated and therefore changes, an MCS corresponding to the CQI may also not change.

A CQI table or a CQI section corresponding to a downlink resource utilization mode may be a type of empirical value.

In a type of downlink resource utilization mode, statistics features of a channel SINR including an average value, a start point, an end point, and probability distribution of a channel SINR are obtained by measurement. The range and a major distribution region of the SINR may be obtained, for example, a distribution region in which over 90% SINRs are distributed. Then, according to the SINR statistics features, adjustment is performed on a start point, an end point, or an average value, and so on of a CQI, to adjust a CQI table or a CQI section to cover the range or major distribution region of the SINR of the channel when the downlink resource utilization mode is used. An adjustment mode is the same as the foregoing several embodiments.

For example, when a UE determines a CQI corresponding to a resource that is planned in advance to use a certain transmission mode, if the same CQI table and CQI section may not cover SINRs of different resources, different CQI start points may be set on different resources for the UE. For resources that are not planned in advance by a UE, if the same CQI table and CQI section may not cover SINRs of different resources, different CQI start points may be set on different resources for the UE, and an SINR step corresponding to a CQI is unchanged. The UE, when feeding back a CQI, at the same time, feeds back a corresponding CQI start point, or after determining a new CQI table and CQI section with an eNB, generates and feeds back a CQI according to the new CQI table and CQI section. Planning in advance herein refers to whether some certain resources are occupied, and if the resources are planned in advance to be occupied, interference may be generated to a neighboring cell. So, if resources are planned in advance, interference is rather determined, and an SINR range is also rather clear. If resources are planned in advance to be occupied, interference is large, and an SINR may be relatively low; if resources are planned in advance not to be used, interference is small, and an SINR is relatively high.

Updating or creation of a CQI table and a CQI section herein may be initiated by a UE, and may also be initiated by an eNB, and triggering and adjustment are performed by using a method similar to the first embodiment.

503: Obtain, by measurement, an SINR value of a downlink channel that adopts the data transmission mode.

504: Determine a CQI corresponding to the SINR value of the downlink channel according to the CQI table or the CQI section corresponding to the data transmission mode.

505: Feed back the CQI to a network side, which is used for the network side to determine, according to the CQI and the CQI table and the CQI section corresponding to the data transmission mode, an SINR value corresponding to a CQI fed back by a UE, and then perform scheduling according to the SINR value.

The embodiment of the present invention modifies a CQI expression mode of cell-specific (cell-specific) to a CQI expression mode of UE-specific (user-specific), and makes an existing CQI feedback mode be capable of adapting to LTEA and a plurality of different resource utilization modes and application scenarios in the future, to effectively improve channel quality feedback accuracy in LTEA and a future wireless communications system, thereby enhancing cell average throughput and throughput of a cell edge user.

FIG. 6 is a flowchart of an SINR feedback method according to a fourth embodiment of the present invention. As shown in FIG. 6, the method includes the following steps.

601: Receive a UE-reported CQI in a type of resource utilization mode.

A UE measures in the resource utilization mode to obtain an SINR value in the resource utilization mode. According to a CQI table or a CQI section corresponding to the resource utilization mode, a CQI corresponding to the SINR value is determined. For the procedure for determining the CQI table or the CQI section corresponding to the resource utilization mode, reference may be made to a third embodiment for details, which is not described in detail herein.

602: Obtain a CQI table or a CQI section corresponding to the resource utilization mode for the UE.

For details about a CQI table or a CQI section corresponding to a resource utilization mode, reference may be made to relevant description in the foregoing embodiments, which is not introduced in detail herein. A CQI table or a CQI section corresponding to a resource utilization mode may be preset in an eNB, and according to the preset CQI table or CQI section corresponding to the resource utilization mode, an SINR value is determined. If a UE performs adjustment on the CQI table or the CQI section corresponding to the resource utilization mode, an eNB needs to obtain an adjusted amount of the CQI table or the CQI section corresponding to the resource utilization mode, and according to the adjusted amount, performs adjustment on the CQI table or the CQI section corresponding to the resource utilization mode. If the eNB performs adjustment on the CQI table or the CQI section corresponding to the resource utilization mode, the UE needs to be informed of the adjusted amount.

According to an adjusted CQI table or CQI section corresponding to a resource utilization mode, an SINR value is determined.

603: Determine, according to the CQI table or the CQI section corresponding to the resource utilization mode and the reported CQI, an SINR value corresponding to the CQI fed back by the UE, and then perform scheduling according to the SINR value.

The embodiment of the present invention modifies a CQI expression mode of cell-specific (cell-specific) to a CQI expression mode of UE-specific (user-specific), and makes an existing CQI feedback mode be capable of adapting to LTEA and a plurality of different transmission modes and application scenarios in the future, to effectively improve channel quality feedback accuracy in LTEA and a future wireless communications system, thereby enhancing cell average throughput and throughput of a cell edge user.

A UE type, for example, may be divided into a UE in a cell edge region and a UE in a cell center; a UE with a certain RSRQ range; or a UE belonging to a specific type of cell, and so on. CQI tables or CQI sections corresponding to different types of UEs may be different. A corresponding CQI table or CQI section is determined according to a UE type.

After UEs of different types obtain, by measurement, SINR values of a downlink channel, according to a CQI table or a CQI section corresponding to the UE type, a CQI value that needs to be reported to an eNB is determined. After the eNB receives the CQI value reported by the UE, according to the CQI table or the CQI section corresponding to the UE type, an SINR value is  determined, thereby to perform scheduling. The CQI table or the CQI section corresponding to the UE type may be preset in the UE and the eNB. When the preset CQI table or CQI section corresponding to the UE type is improper, the UE or the eNB may update or re-create a CQI table or a CQI section corresponding to the UE type. A specific implementation mode is similar to the foregoing embodiment, which is not described in detail herein. Similarly, after adjustment is performed on the CQI table or the CQI section corresponding to the UE type, keeping synchronization between the UE and the eNB is required. That is, an adjustment parameter for the CQI table or the CQI section, such as an adjusted amount of an SINR, is informed between the UE and the eNB.

An embodiment of the present invention provides a user equipment and a base station for implementing an SINR feedback method in the present invention. The user equipment and the base station provided by the embodiment of the present invention are used to execute the foregoing methods. For some relevant concepts and description, reference may be made to the foregoing description, which is not described in detail herein.

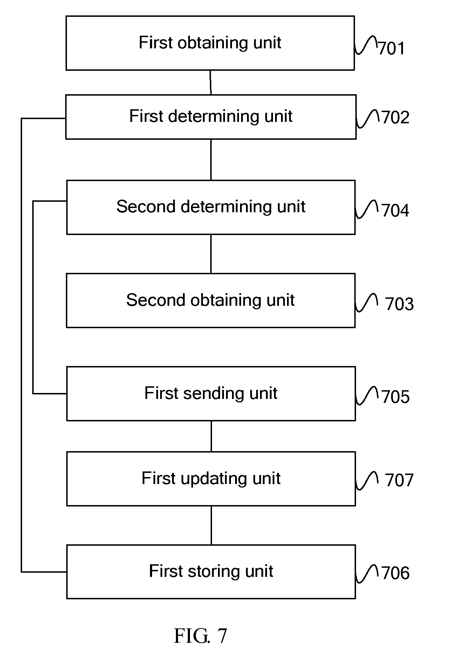

FIG. 7 is a structural schematic diagram of a user equipment according to the present invention. As shown in FIG. 7, the user equipment includes:

a first obtaining unit (701), configured to obtain a data transmission mode, a resource utilization mode, or a user equipment type for performing data transmission;
a first determining unit (702), configured to obtain a CQI (Channel Quality Indicator, channel quality indicator) table or a CQI section corresponding to the data transmission mode, the resource utilization mode, or the user equipment type obtained by the first obtaining unit (702);
a second obtaining unit (703), configured to obtain, by measurement, an SINR (Signal to interference plus noise ratio, signal to interference plus noise ratio) value of a downlink channel for performing the data transmission;
a second determining unit (704), configured to determine a CQI corresponding to the SINR value according to the CQI table or the CQI table section corresponding to the data transmission mode, the resource utilization mode, or the user equipment type determined by the first determining unit (702), and the SINR value obtained by the second obtaining unit (703); and
a first sending unit (705), configured to feed back the determined CQI to a network side entity.

The user equipment further includes: a first storing unit (706), configured to store a preset CQI table or CQI section corresponding to the data transmission mode, the resource utilization mode, or the user equipment type; where the first determining unit (702) is specifically configured to obtain, from the preset CQI table or CQI section corresponding to the data transmission mode, the resource utilization mode, or the user equipment type stored in the first storing unit (706), a CQI table or a CQI section corresponding to the data transmission mode, the resource utilization mode, or the user equipment type obtained by the first obtaining unit (701).

The user equipment further includes: a first updating unit (707), configured to: when an SINR range corresponding to the preset CQI table or CQI section corresponding to the data transmission mode, the resource utilization mode, or the user equipment type is inapplicable, update or create a CQI table or a CQI section corresponding to the data transmission mode, the resource utilization mode, or the user equipment type stored in the first storing unit (706); where the first determining unit (702) is specifically configured to obtain, from the updated or created CQI table or CQI section corresponding to the data transmission mode, the resource utilization mode, or the user equipment type stored in the first storing unit (706), a CQI table or a CQI section corresponding to the data transmission mode, the resource utilization mode, or the user equipment type obtained by the first obtaining unit.

When the first updating unit (707) updates or creates a CQI table or a CQI section corresponding to the data transmission mode, the resource utilization mode, or the user equipment type stored in the first storing unit (706), the first sending unit (705) is further configured to inform a network side entity of a parameter for the updated or created CQI table or CQI section corresponding to the data transmission mode, the resource utilization mode, or the user equipment type.

The first obtaining unit (701) is further configured to obtain a CQI table or a CQI section corresponding to a data transmission mode, a resource utilization mode, or a user equipment type obtained by the first obtaining unit from a network side entity.

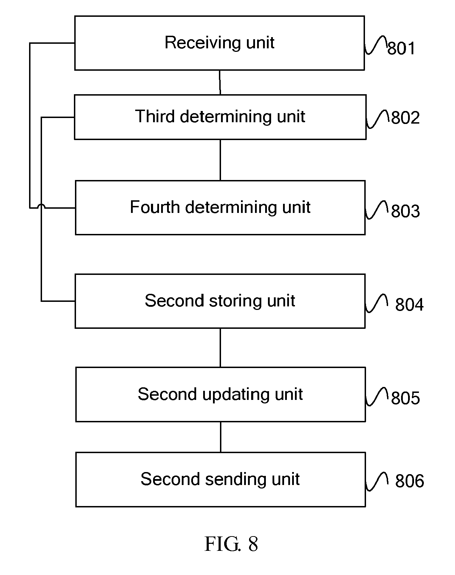

FIG. 8 is a structural schematic diagram of a base station according to the present invention. As shown in FIG. 8, the base station includes:

a receiving unit (801), configured to receive a CQI (Channel Quality Indicator, channel quality indicator) reported by a user equipment, where the CQI is a CQI of a downlink channel for performing data transmission, which is obtained by measurement performed by the user equipment;

a third determining unit (802), configured to determine a CQI (Channel Quality Indicator, channel quality indicator) table or a CQI section corresponding to a data transmission mode, a resource utilization mode, or a user equipment type for performing the data transmission; and

a fourth determining unit (803), configured to determine an SINR (Signal to interference plus noise ratio, signal to interference plus noise ratio) value corresponding to the CQI according to the CQI received by the receiving unit (801), and the CQI table or the CQI section corresponding to the data transmission mode, the resource utilization mode, or the user equipment type determined by the third determining unit (802).

The base station further includes:

a second storing unit (804), configured to store a preset CQI table or CQI section corresponding to the data transmission mode, the resource utilization mode, or the user equipment type; and

the third determining unit (802) is specifically configured to determine the CQI (Channel Quality Indicator, channel quality indicator) table or the CQI section corresponding to the data transmission mode, the resource utilization mode, or the user equipment type for performing the data transmission according to the preset CQI table or CQI section corresponding to the data transmission mode, the resource utilization mode, or the user equipment type stored in the second storing unit (804).

The base station further includes:

a second updating unit (805), configured to: when an SINR range corresponding to the preset CQI table or CQI section corresponding to the data transmission mode, the resource utilization mode, or the user equipment type is inapplicable, update or create a CQI table or a CQI section corresponding to the data transmission mode, the resource utilization mode, or the user equipment type stored in the first storing unit (804); and

the third determining unit (802) is specifically configured to obtain, from the updated or created CQI table or CQI section corresponding to the data transmission mode, the resource utilization mode, or the user equipment type stored in the second storing unit, the CQI table or the CQI section corresponding to the data transmission mode, the resource utilization mode, or the user equipment type obtained by a first obtaining unit.

When the second updating unit (805) updates or creates a CQI table or a CQI section corresponding to the data transmission mode, the resource utilization mode, or the user equipment type stored in the second storing unit (804), the base station further includes: a second sending unit (806), configured to inform a user equipment of a parameter for the updated or created CQI table or CQI section corresponding to the data transmission mode, the resource utilization mode, or the user equipment type.

A unit in the foregoing embodiment may be a physical entity, and may also be a logical entity; may be independently located on different physical entities, and may also be respectively located on different physical entities.

The embodiment of the present invention modifies a CQI expression mode of cell-specific (cell-specific) to a CQI expression mode of UE-specific (user-specific), and makes an existing CQI feedback mode be capable of adapting to LTEA and application scenarios of a plurality of different transmission modes, resource utilization modes, or user equipment types in the future, to effectively improve channel quality feedback accuracy in LTEA and a future wireless communications system, thereby enhancing cell average throughput and throughput of a cell edge user.

Persons of ordinary skill in the art should understand that, all or part of the steps of the foregoing method embodiments may be implemented by a program instructing relevant hardware. The foregoing program may be stored in a computer readable storage medium. When the program runs, the above steps included in the method embodiments are performed. The foregoing storage medium may be any medium capable of storing program codes, such as a ROM, a RAM, a magnetic disk, or an optical disk, and the like.

Finally, it should be noted that the foregoing embodiments are merely intended for describing the technical solutions of the present invention other than limiting the present invention. Although the present invention is described in detail with reference to the exemplary embodiments, persons of ordinary skill in the art should understand that they may still make modifications or equivalent substitutions to the technical solutions of the present invention, without departing from the spirit and scope of the technical solutions of the embodiments of the present invention.

**Claims**

1. A method for feeding back a signal to interference plus noise ratio, comprising:

   obtaining a data transmission mode, a resource utilization mode, or a user equipment type for performing data transmission;
   determining a CQI (Channel Quality Indicator, channel quality indicator) table or a CQI section corresponding to the data transmission mode, the resource utilization mode, or the user equipment type;
   obtaining, by measurement, an SINR (Signal to interference plus noise ratio, signal to interference plus noise ratio) value of a downlink channel for performing the data transmission;
   determining a CQI corresponding to the SINR value according to the determined CQI table or CQI section corresponding to the data transmission mode, the resource utilization mode, or the user equipment type, and the obtained SINR value; and
   feeding back the determined CQI to a network side entity.

2. The method according to claim 1, wherein the determining a CQI table or a CQI section corresponding to the data transmission mode, the resource utilization mode, or the user equipment type comprises:

   determining the CQI table or the CQI section corresponding to the data transmission mode, the resource utilization mode, or the user equipment type according to a preset CQI table or CQI section corresponding to the data transmission mode, the resource utilization mode, or the user equipment type; or
   obtaining the CQI table or the CQI section corresponding to the data transmission mode, the resource utilization mode, or the user equipment type from the network side entity.

3. The method according to claim 2, wherein, when an SINR range corresponding to the preset CQI table or CQI section corresponding to the data transmission mode, the resource utilization mode, or the user equipment type is inapplicable, the method further comprises:

   updating or creating the CQI table or the CQI section corresponding to the data transmission mode, the resource utilization mode, or the user equipment type; or
   obtaining the updated or created CQI table or CQI section corresponding to the data transmission mode, the resource utilization mode, or the user equipment type from the network side entity; and
   the determining a CQI table or a CQI section corresponding to the data transmission mode, the resource utilization mode, or the user equipment type comprises: determining the updated or created CQI table or CQI section corresponding to the data transmission mode, the resource utilization mode, or the user equipment type as the CQI table or the CQI section corresponding to the data transmission mode, the resource utilization mode, or the user equipment type.

4. The method according to claim 3, when the CQI table or the CQI section corresponding to the data transmission mode, the resource utilization mode, or the user equipment type is updated or created, further comprising:

   informing the network side entity of a parameter for the updated or created CQI table or CQI section corresponding to the data transmission mode, the resource utilization mode, or the user equipment type.

5. The method according to claim 3, wherein the parameter for the updated or created CQI table or CQI section corresponding to the data transmission mode, the resource utilization mode, or the user equipment type comprises: an SINR start point, an SINR end point, an SINR step, the number of included CQIs, or a value of an SINR corresponding to a CQI, which is corresponding to the CQI table or the CQI section.

**6.** The method according to claim 3, wherein the updating the CQI table or the CQI section corresponding to the data transmission mode, the resource utilization mode, or the user equipment type comprises: increasing or decreasing an SINR corresponding to the CQI table or the CQI section corresponding to the data transmission mode, the resource utilization mode, or the user equipment type by m dB.

**7.** The method according to claim 3, further comprising: updating an MCS (modulation and coding scheme, Modulation and Coding Scheme) corresponding to the CQI table or the CQI section corresponding to the data transmission mode, the resource utilization mode, or the user equipment type.

**8.** A method for feeding back a signal to interference plus noise ratio, comprising:

receiving a CQI (Channel Quality Indicator, channel quality indicator) reported by a user equipment, wherein the CQI is a CQI of a downlink channel for performing data transmission, which is obtained by measurement performed by the user equipment;

determining a CQI (Channel Quality Indicator, channel quality indicator) table or a CQI section corresponding to a data transmission mode, a resource utilization mode, or a user equipment type for performing the data transmission; and

determining an SINR (Signal to interference plus noise ratio, signal to interference plus noise ratio) value corresponding to the CQI according to the determined CQI table or CQI section corresponding to the data transmission mode, the resource utilization mode, or the user equipment type, and the received CQI.

**9.** The method according to claim 8, wherein the determining a CQI table or a CQI section corresponding to the data transmission mode, the resource utilization mode, or the user equipment type for performing the data transmission comprises:

determining the CQI table or the CQI section corresponding to the data transmission mode, the resource utilization mode, or the user equipment type according to a preset CQI table or CQI section corresponding to the data transmission mode, the resource utilization mode, or the user equipment type.

**10.** The method according to claim 9, wherein, the method further comprises: when an SINR range corresponding to the preset CQI table or CQI section corresponding to the data transmission mode, the resource utilization mode, or the user equipment type is inapplicable, the method further comprises:

updating or creating the CQI table or the CQI section corresponding to the data transmission mode, the resource utilization mode, or the user equipment type; and

obtaining the updated or created CQI table or CQI section corresponding to the data transmission mode, the resource utilization mode, or the user equipment type from the user equipment; and

the determining a CQI table or a CQI section corresponding to the data transmission mode, the resource utilization mode, or the user equipment type for performing the data transmission comprises: determining the updated or created CQI table or CQI section corresponding to the data transmission mode, the resource utilization mode, or the user equipment type as the CQI table or the CQI section corresponding to the data transmission mode, the resource utilization mode, or the user equipment type.

**11.** The method according to claim 10, further comprising: when the CQI table or the CQI section corresponding to the data transmission mode, the resource utilization mode, or the user equipment type is updated or created, further comprising:

informing the user equipment of a parameter for the updated or created CQI table or CQI section corresponding to the data transmission mode, the resource utilization mode, or the user equipment type.

**12.** A user equipment, wherein the user equipment comprises:

a first obtaining unit, configured to obtain a data transmission mode, a resource utilization mode, or a user equipment type for performing data transmission;

a first determining unit, configured to obtain a CQI (Channel Quality Indicator, channel quality indicator) table or a CQI section corresponding to the data transmission mode, the resource utilization mode, or the user equipment type obtained by the first obtaining unit;

a second obtaining unit, configured to obtain, by measurement, an SINR (Signal to interference plus noise ratio, signal to interference plus noise ratio) value of a downlink channel for performing the data transmission;
a second determining unit, configured to determine a CQI corresponding to the SINR value according to the CQI table or the CQI section corresponding to the data transmission mode, the resource utilization mode, or the user equipment type determined by the first determining unit, and the SINR value obtained by the second obtaining unit; and
a first sending unit, configured to feed back the determined CQI to a network side entity.

13. The user equipment according to claim 12, wherein, the user equipment further comprises:

a first storing unit, configured to store a preset CQI table or CQI section corresponding to the data transmission mode, the resource utilization mode, or the user equipment type; and
the first determining unit is specifically configured to obtain, from the preset CQI table or CQI section corresponding to the data transmission mode, the resource utilization mode, or the user equipment type stored in the first storing unit, the CQI table or the CQI section corresponding to the data transmission mode, the resource utilization mode, or the user equipment type obtained by the first obtaining unit.

14. The user equipment according to claim 13, wherein, the user equipment further comprises:

a first updating unit, configured to: when an SINR range corresponding to the preset CQI table or CQI section corresponding to the data transmission mode, the resource utilization mode, or the user equipment type is inapplicable, update or create a CQI table or a CQI section corresponding to the data transmission mode, the resource utilization mode, or the user equipment type stored in the first storing unit; and
the first determining unit is specifically configured to obtain, from the updated or created CQI table or CQI section corresponding to the data transmission mode, the resource utilization mode, or the user equipment type stored in the first storing unit, the CQI table or the CQI section corresponding to the data transmission mode, the resource utilization mode, or the user equipment type obtained by the first obtaining unit.

15. The user equipment according to claim 14, wherein, when the first updating unit updates or creates the CQI table or the CQI section corresponding to the data transmission mode, the resource utilization mode, or the user equipment type stored in the first storing unit, the first sending unit is further configured to inform the network side entity of a parameter for the updated or created CQI table or CQI section corresponding to the data transmission mode, the resource utilization mode, or the user equipment type.

16. The user equipment according to claim 12, wherein the first obtaining unit is further configured to obtain the CQI table or the CQI section corresponding to the data transmission mode, the resource utilization mode, or the user equipment type obtained by the first obtaining unit from the network side entity.

17. A base station, comprising:

a receiving unit, configured to receive a CQI (Channel Quality Indicator, channel quality indicator) reported by a user equipment, wherein the CQI is a CQI of a downlink channel for performing data transmission, which is obtained by measurement performed by the user equipment;
a third determining unit, configured to determine a CQI table or a CQI section corresponding to a data transmission mode, a resource utilization mode, or a user equipment type for performing the data transmission; and
a fourth determining unit, configured to determine an SINR (Signal to interference plus noise ratio, signal to interference plus noise ratio) value corresponding to the CQI according to the CQI received by the receiving unit, and the CQI table or the CQI section corresponding to the data transmission mode, the resource utilization mode, or the user equipment type determined by the third determining unit.

18. The base station according to claim 17, wherein, the base station further comprises:

a second storing unit, configured to store a preset CQI table or CQI section corresponding to the data transmission mode, the resource utilization mode, or the user equipment type; and
the third determining unit is specifically configured to determine the CQI (Channel Quality Indicator, channel quality indicator) table or the CQI section corresponding to the data transmission mode, the resource utilization mode, or the user equipment type for performing the data transmission according to the preset CQI table or CQI section corresponding to the data transmission mode, the resource utilization mode, or the user equipment type stored in the second storing unit.

**19.** The base station according to claim 18, wherein, the base station further comprises:

a second updating unit, configured to: when an SINR range corresponding to the preset CQI table or CQI section corresponding to the data transmission mode, the resource utilization mode, or the user equipment type is inapplicable, update or create a CQI table or a CQI section corresponding to the data transmission mode, the resource utilization mode, or the user equipment type stored in a first storing unit; and
the third determining unit is specifically configured to obtain, from the updated or created CQI table or CQI section corresponding to the data transmission mode, the resource utilization mode, or the user equipment type stored in the second storing unit, the CQI table or the CQI section corresponding to the data transmission mode, the resource utilization mode, or the user equipment type obtained by a first obtaining unit.

**20.** The base station according to claim 19, wherein, when the second updating unit updates or creates the CQI table or the CQI section corresponding to the data transmission mode, the resource utilization mode, or the user equipment type stored in the second storing unit, the base station further comprises: a second sending unit, configured to inform the user equipment of a parameter for the updated or created CQI table or CQI section corresponding to the data transmission mode, the resource utilization mode, or the user equipment type.

Obtain a data transmission mode, a resource utilization mode, or a user equipment type for performing data transmission. — 101

Determine a CQI table or a CQI section corresponding to the data transmission mode, the resource utilization mode, or the user equipment type. — 102

Obtain, by measurement, an SINR value of a downlink channel for performing the data transmission. — 103

According to the determined CQI table or CQI table section corresponding to the data transmission mode, the resource utilization mode, or the user equipment type, and the obtained SINR value, determine a CQI corresponding to the SINR value. — 104

Feed back the determined CQI to a network side entity. — 105

FIG. 1

Receive a CQI reported by a user equipment, where, the CQI is, by measurement performed by the user equipment, an obtained CQI of a downlink channel for performing data transmission. — 201

Determine a CQI table or a CQI section corresponding to a data transmission mode, a resource utilization mode, or a user equipment type for performing the data transmission. — 202

According to the determined CQI table or CQI section corresponding to the data transmission mode, the resource utilization mode, or the user equipment type, and the received CQI, determine an SINR value corresponding to the CQI. — 203

FIG. 2

| Obtain a data transmission mode. | 301 |

| Determine a CQI table or a CQI table section corresponding to the data transmission mode. | 302 |

| Obtain, by measurement, an SINR value of a downlink channel that adopts the data transmission mode. | 303 |

| According to the CQI table corresponding to the data transmission mode, determine a CQI corresponding to the SINR value of the downlink channel. | 304 |

| Feed back the CQI to a network side. | 305 |

FIG. 3

| Receive a UE-reported CQI in a type of data transmission mode. | 401 |

| Determine a CQI table or a CQI section corresponding to the data transmission mode. | 402 |

| According to the CQI table or the CQI section corresponding to the data transmission mode, and the reported CQI, determine an SINR value corresponding to the CQI fed back by the UE, and then perform scheduling based on the SINR value. | 403 |

FIG. 4

Determine a downlink resource utilization mode. /501

Determine a CQI table or a CQI section corresponding to the downlink resource utilization mode. /502

Obtain, by measurement, an SINR value of a downlink channel that adopts a data transmission mode. /503

According to the CQI table or the CQI section corresponding to the data transmission mode, determine a CQI corresponding to the SINR value of the downlink channel. /504

Feed back the CQI to a network side, which is used for the network side to determine, according to the CQI and the CQI table and the CQI section corresponding to the data transmission mode, an SINR value corresponding to a CQI fed back by a UE, and then perform scheduling based on the SINR value. 505

FIG. 5

Receive a UE-reported CQI in a type of resource utilization mode. /601

Obtain a CQI table or a CQI section corresponding to the resource utilization mode for the UE. /602

Determine, according to the CQI table or the CQI section corresponding to the resource utilization mode, and the reported CQI, an SINR value corresponding to the CQI fed back by the UE, and then perform scheduling according to the SINR value. /603

FIG. 6

| First obtaining unit | 701 |

| First determining unit | 702 |

| Second determining unit | 704 |

| Second obtaining unit | 703 |

| First sending unit | 705 |

| First updating unit | 707 |

| First storing unit | 706 |

FIG. 7

| Receiving unit | 801 |
| Third determining unit | 802 |
| Fourth determining unit | 803 |
| Second storing unit | 804 |
| Second updating unit | 805 |
| Second sending unit | 806 |

FIG. 8

## INTERNATIONAL SEARCH REPORT

| | International application No. |
|---|---|
| | PCT/CN2012/070562 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNKI, CPRSABS, CNTXT, VEN: SINR, signal to interference plus noise ratio, CQI, channel quality indicator, table, interzone, downlink, DL, index

### C. DOCUMENTS CONSIDERED TO BE RELEVANT

| Category* | Citation of document, with indication, where appropriate, of the relevant passages | Relevant to claim No. |
|---|---|---|
| X | CN101242345A(ZTE CORPORATION), 13 Aug. 2008(13.08.2008), the description page 1 paragraphs 2-3, page 7 paragraph 2 to page 10 paragraph 5, figure 1 | 1-20 |
| X | CN101243625A(MATSUSHITA ELECTRIC IND CO., LTD.), 13 Aug. 2008(13.08.2008), the description page 3 paragraph 17 to page 13 paragraph 1, figures 1-16 | 1-7, 12-16 |
| A | Idem | 8-11, 17-20 |
| X | CN101438527A(ERICSSON TELEFON AB L M), 20 May 2009(20.05.2009), the description page 4 paragraph 1 to page 10 paragraph 3, figure 8 | 1-7, 12-16 |
| A | Idem | 8-11, 17-20 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 01 April 2012(01.04.2012) | 26 April 2012(26.04.2012) |

| Name and mailing address of the ISA/CN | Authorized officer |
|---|---|
| State Intellectual Property Office of the P. R. China No. 6, Xitucheng Road, Jimenqiao Haidian District, Beijing 100088, China Facsimile No. (86-10)62019451 | WU, Bin Telephone No. (86-10)62412019 |

Form PCT/ISA /210 (second sheet) (July 2009)

## INTERNATIONAL SEARCH REPORT
### Information on patent family members

| | International application No. |
|---|---|
| | PCT/CN2012/070562 |

| Patent Documents referred in the Report | Publication Date | Patent Family | Publication Date |
|---|---|---|---|
| CN101242345A | 13.08.2008 | CN101242345B | 21.09.2011 |
| CN101243625A | 13.08.2008 | EP1903692A1 | 26.03.2008 |
| | | JP4823225B2 | 24.11.2011 |
| | | KR20080045137A | 22.05.2008 |
| | | WO2007020994A1 | 22.02.2007 |
| | | CA2619489A1 | 22.02.2007 |
| | | JPWO2007020994S | 26.03.2009 |
| | | US8040912B2 | 18.10.2011 |
| | | US20120008517A1 | 12.01.2012 |
| | | US2009141648A1 | 04.06.2009 |
| | | BR200615360A2 | 17.05.2011 |
| | | IN200800326P3 | 07.03.2008 |
| CN101438527A | 20.05.2009 | TW200812286A | 01.03.2008 |
| | | IN200804845P2 | 20.03.2009 |
| | | US7979075B2 | 12.07.2011 |
| | | EP2020110B1 | 26.10.2011 |
| | | US2007259671A1 | 08.11.2007 |
| | | KR20090011005A | 30.01.2009 |
| | | EP2020110A1 | 04.02.2009 |
| | | WO2007128676A1 | 15.11.2007 |

Form PCT/ISA /210 (patent family annex) (July 2009)

# INTERNATIONAL SEARCH REPORT

International application No.

PCT/CN2012/070562

**A. CLASSIFICATION OF SUBJECT MATTER**

H04L 1/06 (2006.01) i

H04L 1/16 (2006.01) n

H04W 28/18 (2009.01) n

Form PCT/ISA /210 (extra sheet) (July 2009)

**EP 2 667 533 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010619636